# EUROPÄISCHE PATENTSCHRIFT

(11) **EP 1 535 358 B1**
(45) Veröffentlichungstag und Bekanntmachung des Hinweises auf die Patenterteilung: **04.09.2013**
(21) Anmeldenummer: 03790785.4
(22) Anmeldetag: 04.07.2003
(51) Int. Cl.: H01M 2/16

(54) **ELEKTRISCHER SEPARATOR, VERFAHREN ZU DESSEN HERSTELLUNG UND VERWENDUNG IN LITHIUM-HOCHLEISTUNGSBATTERIEN**
ELECTRIC SEPARATOR, METHOD FOR MAKING SAME AND USE THEREOF IN HIGH-POWER LITHIUM CELLS
SEPARATEUR ELECTRIQUE, SON PROCEDE DE PRODUCTION ET SON UTILISATION DANS DES PILES HAUTE PUISSANCE AU LITHIUM

(30) Priorität: 24.08.2002 DE 10238941
(43) Veröffentlichungstag der Anmeldung: 01.06.2005
(73) Patentinhaber: Evonik Degussa GmbH, 45128 Essen (DE)
(72) Erfinder: HENNIGE, Volker, 48249 Dülmen (DE); HYING, Christian, 46414 Rhede (DE); HÖRPEL, Gerhard, 48301 Nottuln (DE)
(86) Internationale Anmeldenummer: PCT/EP2003/007167
(87) Internationale Veröffentlichungsnummer: WO 2004/021499

(56) Entgegenhaltungen:
- WO-A-99/15262
- WO-A-2004/021477
- US-A- 5 558 682

## Beschreibung

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Der Separator ist üblicherweise ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.

Nachteile dieser organischen Polyolefinseparatoren sind deren relativ geringe thermische Belastbarkeit von deutlich unter 150 °C sowie ihre geringe chemische Stabilität in anorganischen Lithium-Batteriezellen. Die verwendeten Polyolefine werden in den Li-Batterien beim Kontakt des Separators mit dem Lithium bzw. mit dem lithiierten Graphit langsam angegriffen. Bei Systemen mit einem Polymerelektrolyten kommt es deshalb zur Bildung einer dichten Oxidationsproduktschicht, die eine weitere Zerstörung des Separators in Li-Ionen-Batterien verhindert.

Es gibt erste Versuche anorganische Verbundmaterialien als Separatoren einzusetzen. So wird in DE198 38 800 ein elektrischer Separator beschrieben, der ein flächiges, mit einer Vielzahl von Öffnungen versehenes, flexibles Substrat mit einer darauf befindlichen Beschichtung umfasst, welcher dadurch gekennzeichnet ist, dass das Material des Substrates ausgewählt ist aus Metallen, Legierungen, Kunststoffen, Glas und Kohlefaser oder einer Kombination solcher Materialien und die Beschichtung eine flächig durchgehende, poröse, elektrisch nicht leitende keramische Beschichtung ist. Die Separatoren, die einen Support aus elektrisch leitendem Material aufweisen (wie im Beispiel angegeben), haben sich allerdings als ungeeignet für Lithium-Ionen-Zellen herausgestellt, da die Beschichtung in der beschriebenen Dicke nicht großflächig fehlerfrei hergestellt werden kann und es somit sehr leicht zu Kurzschlüssen kommt.

Zusammenfassend lässt sich feststellen, dass zur Zeit kein geeignetes Separatormaterial vorliegt, mit dem man insbesondere auch gewickelte anorganische Hochleistungs- bzw. Hochenergiebatterien kostengünstig produzieren kann.

In vorangehenden Arbeiten (DE 101 42 622) konnte gezeigt werden, dass dies realisierbar ist mit einem Material, das ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine Dicke von kleiner 100 µm aufweist und biegbar ist, einen in Verbindung mit dem Elektrolyten genügend geringen Widerstand aufweist und trotzdem eine ausreichend große Langzeitbeständigkeit aufweist. Für eine Vielzahl von Anwendungen ist der Widerstand dieser Separatoren aber noch immer zu hoch, da als Träger ein Glasgewebe eingesetzt wird, das erstens zu dick ist und zweitens eine zu geringe Porosität aufweist. Wünschenswert ist es außerdem einen gleichzeitig thermisch und chemisch beständigen Separator einsetzen zu können. Es war deshalb Aufgabe der vorliegenden Erfindung einen

Separator bereitzustellen, der thermisch stabiler als bis jetzt bekannte Polymerseparatoren ist.

Bei der weitergehenden Optimierung der Eigenschaften der in DE 101 42 622 beschriebenen Separatoren wurde gefunden, dass Separatoren mit den genannten Eigenschaften realisierbar sind, wenn polymere Substratmaterialien eingesetzt werden. Dadurch erhält man elektrische Separatoren, die ein flächiges, mit einer Vielzahl von Öffnungen versehenes, flexibles Substrat mit einer auf und in diesem Substrat befindlichen Beschichtung umfassen, wobei das Material des Substrates ausgewählt ist aus ungewebten, nicht elektrisch leitfähigen Fasern von Polymeren, und die Beschichtung eine poröse, elektrisch isolierende, keramische Beschichtung ist. Der Separator weist eine Dicke von kleiner 80 µm auf, ist biegbar und zeigt in Verbindung mit einem Elektrolyten einen genügend geringen Widerstand und besitzt zudem eine ausreichend große Langzeitbeständigkeit. Die chemische Beständigkeit gegenüber starken Basen erhält man durch Verwendung von stabilen Polymeren wie z. B. Polypropylen/Polyethylen oder Polyacrylnitril-Vlies und beständigen keramischen Materialien wie ZrO₂ und TiO₂. Obwohl die in der noch nicht veröffentlichen Anmeldung DE 102 08 277 beschriebenen Separatoren sehr gut für die beschriebenen Aufgaben geeignet sind, mussten wir feststellen, dass die dort beschriebenen Separatoren aber nicht sonderlich gut geeignet sind für den Einsatz in Lithium-Hochleistungsbatterien, da in diesen Batterien in kürzester Zeit bei nahezu konstanter Spannung große Ströme abgegeben werden müssen. Die in DE 102 08 277 beschriebenen Separatoren erfüllen die Leistungsanforderungen an solche Separatoren für Lithium-Hochleistungsbatterien vermutlich deshalb nicht, weil sie eine zu geringe Porosität und zu große Dicke und damit einhergehend eine immer noch zu geringe Ionenleitfähigkeit aufweisen.

Es war deshalb Aufgabe der vorliegenden Erfindung einen Separator bereitzustellen, der für den Einsatz in Lithium-Hochleistungsbatterien geeignet ist. Damit ein Separator für ein solches Batteriesystem einsetzbar ist, muss der Separator eine deutlich verbesserte Porosität und eine möglichst geringe Dicke aufweisen, weshalb es auch Aufgabe der vorliegenden Erfindung war einen Separator bereitzustellen, der eine höhere Porosität als bekannte Separatoren aufweist, gleichzeitig aber eine hohe mechanische und thermische Stabilität bei möglichst geringer Dicke aufweist.

Überraschenderweise wurde gefunden, dass Separatoren, die ein Vlies mit einer Dicke kleiner 30 µm, einer Porosität von mehr als 50 % und einer weitestgehend homogenen Porenradienverteilung, bei der mindestens 50 % der Poren Porenradien von 75 bis 150 µm aufweisen und bei denen das Vlies mit einer auf und in dem Vlies befindlichen porösen anorganischen Beschichtung versehen ist, die vorzugsweise mit Zirkonoxid oder Siliziumoxid verklebte Partikel mit einer Partikelgröße von 0,5 bis 7 µm aufweist, eine hohe Porosität, eine ideale Porenweite und eine geringe Dicke bei gleichzeitig sehr guter thermischer, mechanischer und chemischer Stabilität aufweisen und deshalb deutlich besser als Separatoren in Lithium-Hochleistungsbatterien eingesetzt werden können.

Gegenstand der vorliegenden Erfindung ist deshalb ein Separator, umfassend ein flexibles Vlies mit einer auf und in diesem Vlies befindlichen porösen anorganischen Beschichtung, wobei das Material des Vlieses ausgewählt ist aus ungewebten, nicht elektrisch leitfähigen Polymerfasern, welcher dadurch gekennzeichnet ist, dass das Vlies eine Dicke von weniger als 30 µm, eine Porosität von mehr als 50 %, vorzugsweise 50 bis 97 % und eine Porenradienverteilung aufweist, bei der mindestens 50 % der Poren einen Porenradius von 75 bis 150 µm aufweisen.

Außerdem ist Gegenstand der vorliegenden Erfindung ein Verfahren zur Herstellung eines erfindungsgemäßen Separators, welches dadurch gekennzeichnet ist, dass ein flexibles Vlies, das eine Dicke von weniger als 30 µm, eine Porosität von 50 bis 97 % und eine Porenradienverteilung aufweist, bei der mindestens 50 % der Poren einen Porenradius von 75 bis 150 µm aufweisen, in und auf diesem Substrat mit einer Beschichtung versehen wird, wobei das Material des Vlieses ausgewählt ist aus ungewebten, nicht elektrisch leitfähigen Polymerfasern.

Ebenso ist Gegenstand der vorliegenden Erfindung die Verwendung eines erfindungsgemäßen Separators als Separator in Lithium-Hochleistungsbatterien sowie entsprechende Lithium-Hochleistungsbatterien, die einen erfindungsgemäßen Separator aufweisen.

Im Allgemeinen kann festgestellt werden, dass - bei gleichbleibender Porosität und Tortousität - je größer die Poren im Separator sind um so niedriger der sich einstellende Widerstand des mit Elektrolyt getränkten Separators ist. Zudem kann durch die Wahl geeigneter Partikel die Porosität des Separators beeinflusst werden, was in gleicher Weise zu geänderten Eigenschaften führt. Eine häufig in diesem Zusammenhang benutzte Kenngröße eines Separators ist die Gurley-Zahl. Sie ist ein Maß für die Gasdurchlässigkeit des trockenen porösen Separators. Wie von O. Besenhard im "Handbook of Battery Materials" beschrieben, kann man direkt aus der Gurley Zahl auf die Leitfähigkeit eines bekannten Systems schließen. Verallgemeinert kann man festhalten, dass eine größere Gasdurchlässigkeit (d. h. kleinere Gurley-Zahl) eine um so höhere Leitfähigkeit des benetzten Separators in der Batteriezelle bewirkt. Die Werte der Gurley-Zahl kommerziell erhältlicher Separatoren liegen bei 10 bis 50, wenn der Porendurchmesser um 0,1 µm beträgt, und bei 20 bis 100, wenn der Porendurchmesser um 0,05 µm beträgt. (G. Venugiopal; J. of Power Sources 77 (1999) 34-41).

Es ist aber immer zu beachten, dass ein außergewöhnlich kleiner Wert der Gurley-Zahl auch auf Defekte, also große Löcher, im Separator hindeuten kann. Diese Defekte können beim Betrieb einer Batterie zu einem inneren Kurzschluss führen. Die Batterie kann sich dann in einer gefährlichen Reaktion sehr schnell selbst entladen. Hierbei treten dann so große elektrische Ströme auf, dass eine geschlossene Batteriezelle im ungünstigsten Fall sogar explodieren kann. Aus diesem Grund kann der Separator entscheidend zur Sicherheit bzw. zur fehlenden Sicherheit einer Lithiumhochleistungs- oder -hochenergie-Batterie beitragen. Daher ist der Separator ein entscheidendes Bauteil in einer Batterie dem man sehr großes Augenmerk widmen muss.

Polymerseparatoren bringen beispielsweise die für Lithium-Batterien zur Zeit geforderte Sicherheit, indem sie ab einer bestimmten Temperatur (der Shut-Down-Temperatur, die bei ca. 120 °C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum erliegen. Wird die Zelle aufgrund äußerer Umstände aber weiter erwärmt, so wird bei ca. 150 bis 180 °C die Break-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion, die mit einer Explosion der Zelle endet, bzw. der entstehende Druck wird durch ein Überdruckventil (eine Berstscheibe) häufig unter Feuererscheinungen abgebaut.

Bei dem erfindungsgemäßen hybriden, also anorganische Komponenten und polymeres Trägermaterial aufweisenden Separator kommt es zum Shut-Down (Abschaltung) wenn durch die hohe Temperatur das Polymergefüge des Trägermaterials schmilzt und in die Poren des anorganischen Materials eindringt und diese dadurch verschließt. Zum sogenannten Melt-Down (Zusammenbruch) kommt es bei dem erfindungsgemäßen Separator dagegen nicht. Der erfindungsgemäße Separator erfiillt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Falls ein zusätzlicher Shut down-Mechanismus (Abschaltmechanismus) für die Anwendung zwingend erforderlich ist, so kann dies zudem dadurch erreicht werden, das die Oberfläche und/oder die Poren des erfindungsgemäßen keramischen bzw. hybriden Separators mit einem Stoff ausgestattet werden, der bei Erreichen der Temperaturgrenze die Poren schließt und den weiteren Ionenfluss verhindert. Dies kann Beispielweise durch ein Polymer oder ein Wachs erreicht werden, dessen Schmelzpunkt in diesem Bereich liegt.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen hybriden Separator schmilzt allenfalls das polymere Substratmaterial, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Außerdem besitzt der erfindungsgemäße Separator einen deutlichen Preisvorteil gegenüber

Separatoren auf Basis von Glas- oder Keramikgeweben, wie sie z. B. in DE 101 42 622 beschrieben werden. Dies liegt neben den deutlich unterschiedlichen Materialkosten unter anderem daran, dass das Polymersubstrat wesentlich einfacher zu handhaben ist als Glas- oder Keramikgewebe, welches doch eine gewisse Sprödigkeit aufweist und bei unvorsichtiger Handhabung zerstört wird. Der gesamte Herstellungsprozess ist deshalb aufwändiger und damit kostenintensiver.

Durch die Art des eingesetzten Vlieses, welches eine besonders gut geeignete Kombination aus Dicke und Porosität aufweist, können Separatoren hergestellt werden, die den Anforderungen an Separatoren in Hochleistungsbatterien, insbesondere Lithium-Hochleistungsbatterien gerecht werden können. Durch die gleichzeitige Verwendung von in ihrer Partikelgröße genau abgestimmten Oxid-Partikeln zur Herstellung der porösen keramischen Beschichtung wird eine besonders hohe Porosität des fertigen Separators erreicht, wobei die Poren immer noch genügend klein sind um ein Durchwachsen von Lithium-Whiskern durch den Separator zu verhindern.

Um hier eine ideale Porengröße bzw. Porosität des Separators zu erreichen hat es sich als besonders vorteilhaft erwiesen, die eingesetzten Oxidpartikel vor dem suspendieren durch Windsichten zu klassieren, um möglichst gleichgroße Oxid-Partikel einsetzen zu können, da bei handelsüblichen Metalloxid-Partikeln häufig ein nicht unbeträchtlicher Anteil an Partikeln vorliegt, die deutlich kleiner als die mittlere Partikelgröße sind. Das Vorliegen einer großen Anzahl kleinerer Partikel führt aber dazu, dass die Poren teilweise durch diese kleinen Partikel verkleinert oder ganz verschlossen werden. Die ideale Porengröße bzw. Porosität des Separators ist dann nicht immer zu erreichen.

Ein Hydroklassieren in Form einer Nasssiebung kann zudem noch durchgeführt werden, um zu große Partikel abzutrennen. Der Grobanteil mit bis zu 5 Gew.-% der Gesamtpulvermenge besitzt im ungünstigsten Fall Partikel, welche größer sind als die Gesamtdicke des Separators. Mit diesen Pulvern lassen sich keine fehlerfreien Beschichtungen durchführen. Folglich müssen diese auf alle Fälle abgetrennt werden. Die maximale Partikelgröße liegt bevorzugt bei 1/3 bis 1/5 und besonders bevorzugt bei kleiner oder gleich 1/10 der Vliesdicke.

Ferner können die partikelhaltigen Suspensionen (Schlicker) durch Klassierzentrifugation so aufgetrennt werden, dass man ausschließlich die ideale Partikelfraktion erhält, welche zudem eine recht enge Partikelgrößenverteilung besitzt.

Auf Grund der hohen Porosität in Verbindung mit der geringen Dicke des Separators ist es außerdem möglich den Separator vollständig oder zumindest nahezu vollständig mit dem Elektrolyten zu tränken, so dass keine Toträume in einzelnen Bereichen des Separators und damit in bestimmten Wicklungen oder Schichtungen der Batteriezellen entstehen können, in denen kein Elektrolyt vorliegt. Dies wird insbesondere dadurch erreicht, dass durch die Einhaltung der Partikelgröße der Oxid-Partikel die erhaltenen Separatoren frei bzw. nahezu frei von geschlossenen Poren sind, in welche der Elektrolyt nicht eindringen kann.

Die erfindungsgemäßen Separatoren haben außerdem den Vorteil, dass sich an den anorganischen Oberflächen des Separatormaterials die Anionen des Leitsalzes teilweise anlagern, was zu einer Verbesserung der Dissoziation und somit zu einer besseren Ionenleitfähigkeit im Hochstrombereich führt. Ein weiterer, nicht unerheblicher Vorteil des erfindungsgemäßen Separators liegt in der sehr guten Benetzbarkeit. Aufgrund der hydrophilen keramischen Beschichtung erfolgt die Benetzung mit Elektrolyten sehr rasch, was ebenfalls zu einer geringfügig verbesserten Leitfähigkeit führt.

Zusammenfassen lassen sich die Vorteile des erfindungsgemäßen Separators für den Einsatz in Hochleisungs-Lithium-Ionen-Batterien zu:
◆ Hohe Porosität
◆ Ideale Porenweite
◆ Geringe Dicke des Separators
◆ Geringes Flächengewicht
◆ Sehr gutes Benetzungsverhalten
◆ Verbesserte Dissoziation des Leitsalzes

Der erfindungsgemäße Separator und ein Verfahren zu seiner Herstellung wird im Folgenden beschrieben, ohne dass die Erfindung auf diese Ausführungsarten beschränkt sein soll.

Der erfindungsgemäße Separator, umfassend ein flexibles Vlies mit einer auf und in diesem Vlies befindlichen porösen anorganischen Beschichtung, wobei das Material des Vlieses ausgewählt ist aus ungewebten, nicht elektrisch leitfähigen Polymerfasern, zeichnet sich dadurch aus, dass das Vlies eine Dicke von weniger als 30 µm, eine Porosität von mehr als 50 %, vorzugsweise von 50 bis 97 % und eine Porenradienverteilung aufweist, bei der mindestens 50 % der Poren einen Porenradius von 75 bis 150 µm aufweisen.

Besonders bevorzugt weist der erfindungsgemäße Separator ein Vlies auf, welches eine Dicke von 5 bis 30 µm, vorzugsweise eine Dicke von 10 bis 20 µm aufweist. Besonders wichtig für die Verwendung in einem erfindungsgemäßen Separator ist eine möglichst homogene Porenradienverteilung im Vlies wie oben angegeben. Eine noch homogenere Porenradienverteilung im Vlies führt in Verbindung mit optimal abgestimmten Oxid-Partikeln bestimmter Größe zu einer optimierten Porosität des erfindungsgemäßen Separators.

Vorzugsweise weist das Vlies eine Porosität von 60 bis 90 %, besonders bevorzugt von 70 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die große Porosität des Substrates ermöglicht auch eine höhere Porosität des erfindungsgemäßen hybriden Separators, weshalb eine höhere Aufnahme an Elektrolyten mit dem erfindungsgemäßen Separator erzielt werden kann. Bevorzugte Vliese sind Vliese aus Polymerfasern.

Damit ein Separator mit isolierenden Eigenschaften erhalten werden kann, weist dieser als Polymerfasern für das Vlies vorzugsweise nicht elektrisch leitfähige Fasern von Polymeren auf, die vorzugsweise ausgewählt sind aus Polyacrylnitril (PAN), Polyester, wie z. B. Polyethylenterephthalat und/oder Polyolefin (PO), wie z. B. Polypropylen (PP) oder Polyethylen (PE) oder Mischungen solcher Polyolefine. Die Polymerfasern der Vliese weisen vorzugsweise einen Durchmesser von 0,1 bis 10 µm, besonders bevorzugt von 1 bis 4 µm auf. Besonders bevorzugte flexible Vliese weisen ein Flächengewicht von kleiner 20 g/m², vorzugsweise von 5 bis 10 g/m² auf.

Die erfindungsgemäßen Separatoren weisen vorzugsweise eine Dicke von kleiner 35 µm, bevorzugt kleiner 25 µm, besonders bevorzugt eine Dicke von 15 bis 25 µm auf Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Der erfindungsgemäße Separator weist auf und in dem Vlies eine poröse, elektrisch isolierende, keramische Beschichtung auf. Vorzugsweise weist die auf und in dem Vlies befindliche poröse anorganische Beschichtung Oxid-Partikel der Elemente Al, Si und/oder Zr mit einer mittleren Partikelgröße von 0,5 bis 7 µm, bevorzugt von 1 bis 5 µm und ganz besonders bevorzugt von 1,5 bis 3 µm auf. Besonders bevorzugt weist der Separator eine auf und in dem Vlies befindliche poröse anorganische Beschichtung auf, die Aluminiumoxid-Partikel mit einer mittleren Partikelgröße von 0,5 bis 7 µm, bevorzugt von 1 bis 5 µm und ganz besonders bevorzugt von 1,5 bis 3 µm aufweist, die mit einem Oxid der Elemente Zr oder Si verklebt sind. Um eine möglichst hohe Porosität zu erzielen, liegen bevorzugt mehr als 50 Gew.-% und besonders bevorzugt mehr als 80 Gew.-% aller Partikel in den oben genannten Grenzen der mittleren Partikelgröße. Wie bereits oben beschrieben beträgt die maximale Partikelgröße vorzugsweise 1/3 bis 1/5 und besonders bevorzugt kleiner oder gleich 1/10 der Dicke des eingesetzten Vlieses.

Vorzugsweise weist der Separator eine Porosität von 30 bis 80 % , bevorzugt von 40 bis 75 % und besonders bevorzugt von 45 bis 70 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen.

Die erfindungsgemäßen Separatoren zeichnen sich dadurch aus, dass sie eine Reißfestigkeit von mindestens 1 N/cm, vorzugsweise von mindestens 3 N/cm und ganz besonders bevorzugt von 3 bis 10 N/cm aufweisen können. Die erfindungsgemäßen Separatoren lassen sich vorzugsweise ohne Beschädigung bis auf jeden Radius bis herab zu 100 m, vorzugsweise bis herab zu 50 mm und ganz besonders bevorzugt bis herab zu 1 mm biegen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Es kann vorteilhaft sein, wenn der Separator einen nicht inhärenten Shut-Down-Mechanismus aufweist. Dieser kann z. B. dadurch realisiert werden, dass auf oder in dem Separator eine sehr dünne Wachs- oder Polymerpartikelschicht vorhanden ist, die bei einer gewünschten Abschalttemperatur schmelzen, sogenannte Abschaltpartikel. Besonders bevorzugte Materialien, aus denen die Abschaltpartikel bestehen können, sind beispielweise natürliche oder künstliche Wachse oder niedrigschmelzende Polymere, wie z. B. Polyolefine, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird.

Vorzugsweise weisen die Abschaltpartikel eine mittlere Partikelgröße (D_{w}) auf, die größer oder gleich der mittleren Porengröße (dₛ) der Poren der porösen anorganischen Schicht des Separators ist. Dies ist insbesondere deshalb vorteilhaft, weil so ein Eindringen und Verschließen der Poren der Separatorschicht, welches eine Reduktion des Porenvolumens und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von 2 D_{w} bis D_{w} beträgt. Ein so ausgerüsteter Separator weist ein primäres Sicherheitsmerkmal auf. Im Gegensatz zu den rein organischen Separatormaterialien kann dieser Separator aber nicht vollständig schmelzen und es kann somit nicht zum Melt-Down kommen. Diese Sicherheitsmerkmale sind aufgrund der sehr großen Energiemengen für Hochenergiebatterien sehr wichtig und werden deshalb häufig gefordert.

Der erfindungsgemäße Separator ist vorzugsweise erhältlich durch ein Verfahren zur Herstellung eines Separators, welches sich dadurch auszeichnet, dass in und auf ein flexibles Vlies, das eine Dicke von weniger als 30 µm, eine Porosität von mehr als 50 %, vorzugsweise von 50 bis 97 % und eine Porenradienverteilung aufweist, bei der mindestens 50 % der Poren einen Porenradius von 75 bis 150 µm aufweisen, durch Aufbringen einer Suspension und zumindest einmaliges Erwärmen, bei welchem die Suspension auf und im Vlies verfestigt wird, eine poröse, anorganische Beschichtung gebracht wird, wobei die Suspension Metalloxid-Partikel und zumindest ein Sol aufweist und das Material des Vlieses ausgewählt ist aus ungewebten, nicht elektrisch leitfähigen Polymerfasern. Vorzugsweise weist die Suspension Metalloxid-Partikel mit einem mittleren Partikeldurchmesser 0,5 bis 7 µm, bevorzugt von 1 bis 5 µm und ganz besonders bevorzugt von 1,5 bis 3 µm der Metalle Al, Zr und/oder Si und zumindest ein Sol auf.

Das Verfahren selbst ist prinzipiell aus WO 99/15262 bekannt, jedoch lassen sich nicht alle Parameter bzw. Einsatzstoffe, insbesondere nicht elektrisch leitfähige Einsatzstoffe, für die Herstellung des erfindungsgemäßen Separators einsetzen. Insbesondere die zur Herstellung der Dispersion verwendeten Partikel sowie die als Substrat verwendeten Vliese unterscheiden sich deutlich von den bisher beschriebenen Einsatzstoffen.

Die Suspension kann z. B. durch Aufdrucken, Aufpressen, Einpressen Aufrollen, Aufrakeln, Aufstreichen, Tauchen, Spritzen oder Aufgießen auf und in das Vlies gebracht werden.

Das eingesetzte Vlies weist vorzugsweise eine Dicke von kleiner 20 µm, bevorzugt kleiner 15 µm und besonders bevorzugt eine Dicke von 7,5 bis 15 µm auf. Besonders bevorzugt werden als Vliese solche eingesetzt, wie sie bei der Beschreibung des erfindungsgemäßen Separators beschrieben wurden.

Das eingesetzte Vlies ist vorzugsweise ein Vlies aus Polymerfasern oder ein Vlies welches zumindest Polymerfasern aufweist. Die Polymerfasern sind bevorzugt ausgewählt aus Polyacrylnitril, Polyester, wie z. B. Polyethylenterephthalat, und/oder Polyolefinen. Aber auch alle anderen bekannten Polymerfasern sind einsetzbar, sofern sie sowohl die für die Herstellung der Separatoren erforderliche Temperaturstabilität aufweisen als auch unter den Betriebsbedingungen in der Lithiumbatterie stabil sind. Bevorzugt weist der erfindungsgemäße Separator Polymerfasern auf, die eine Erweichungstemperatur von größer 100 °C und eine Schmelztemperatur von größer 110 °C aufweisen. Es kann vorteilhaft sein, wenn die Polymerfasern einen Durchmesser von 0,1 bis 10 µm, vorzugsweise von 1 bis 5 µm aufweisen.

Die zur Beschichtung verwendete Suspension weist zumindest ein Sol der Elemente Al, Zr und/oder Si auf, und wird durch Suspendieren von Oxid-Partikeln in zumindest einem dieser Sole hergestellt. Die Sole können durch Hydrolisieren zumindest einer Verbindung mit Wasser oder einer Säure oder eine Kombination dieser Verbindungen erhalten werden. Es kann vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Nitrat, ein Chlorid, ein Carbonat, ein Alkoholat der Elemente Al, Zr und/oder Si hydrolisiert. Die Hydrolyse erfolgt vorzugsweise in Gegenwart von Wasser, Wasserdampf, Eis oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden, wobei die Herstellung von Suspensionen zum Aufbringen auf mit polymerem Sol vorbehandelten Polymerfaservliesen bevorzugt ist.

In einer weiteren Ausführungsvariante des erfindungsgemäßen Verfahrens werden durch Hydrolyse der zu hydrolisierenden Verbindungen polymere Sole hergestellt. Bei dieser bevorzugten Ausführungsvariante des erfindungsgemäßen Verfahrens weist das Sol einen Anteil an Wasser und/oder Säure von kleiner 50 Gew.-% auf. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen, wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung von Solen mit einem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension eingesetzt werden.

Sowohl partikuläre Sole (großer Wasseranteil, geringer Lösemittelanteil) als auch polymere Sole (geringer Wasseranteil, großer Lösemittelanteil) können als Sol in dem erfindungsgemäßen Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen bzw. Separatoren erhalten werden, die Fehler aufweisen und damit unbrauchbar sind.

Es wurde nun überraschenderweise gefunden, dass ein Solsystem bzw. eine Suspension, welches bzw. welche im Benetzungsverhalten den Polymeren angepasst wurde, die Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Suspension. Diese Anpassung erfolgt vorzugsweise durch die Herstellung von Solen bzw. Suspensionen, wobei diese Sole einen oder mehrere Alkohole, wie z. B. Methanol, Ethanol oder Propanol oder Mischungen davon, und/oder aliphatische Kohlenwasserstoffe aufweisen, umfassen. Es sind aber auch andere Lösemittelgemische denkbar, die dem Sol bzw. der Suspension zugegeben werden können, um diese im Vernetzungsverhalten an das verwendete Vlies anzupassen.

Vorzugsweise beträgt der Massenanteil der suspendierten Komponente (Metalloxid-Partikel) an der Suspension das 1 bis 100fache, besonders bevorzugt das 1 bis 50fache und ganz besonders bevorzugt das 1 bis 10fache des eingesetzten Sols. Besonders bevorzugt werden zur Herstellung der Suspension als Metalloxid-Partikel Aluminiumoxidpartikel eingesetzt, die bevorzugt eine mittleren Partikelgröße von 0,5 bis 7 µm aufweisen. Aluminiumoxid-Partikel im Bereich der bevorzugten Partikelgrößen werden beispielweise von der Firma Martinswerke unter den Bezeichnungen MDS 6; DN 206, MZS 3 und MZS 1 und von der Fa. Alcoa mit der Bezeichnung CL3000 SG, CT800 SG und HVA SG angeboten.

Es hat sich herausgestellt, dass der Einsatz von handelsüblichen Metalloxidpartikeln unter Umständen zu unbefriedigenden Ergebnissen führt, da häufig eine sehr große Korngrößenverteilung vorliegt. Es werden deshalb bevorzugt Metalloxidpartikel eingesetzt, die durch ein herkömmliches Verfahren, wie z. B. Windsichten, Zentrifugieren und Hydroklassieren klassiert wurden. Bevorzugt werden als Metalloxidpartikel solche Fraktionen eingesetzt, bei denen der Grobkornanteil, welcher bis zu 10 % der Gesamtmenge ausmacht, durch Nasssiebung abgetrennt wurde. Dieser störende Grobkornanteil, der auch durch die bei der Herstellung der Schlicker typische Verfahren wie etwa Mahlen (Kugelmühle, Attritormühle, Mörsermühle), Dispergieren (Ultra-Turrax, Ultraschall), Zerreiben oder Zerhacken nicht oder nur sehr schwer zerkleinert werden kann, kann z. B. bestehen aus Aggregaten, harten Agglomeraten, Mahlkugelabrieb. Durch die vorgenannten Maßnahmen wird erreicht, dass die anorganische poröse Schicht eine sehr gleichmäßige Porengrößenverteilung aufweist. Dies wird insbesondere dadurch erreicht, dass Metalloxid-Partikel eingesetzt werden, die eine maximale Partikelgröße von vorzugsweise 1/3 bis 1/5 und besonders bevorzugt kleiner oder gleich 1/10 der Dicke des eingesetzten Vlieses aufweisen.

Die folgende Tabelle 1 gibt eine Übersicht, wie sich die Wahl der verschiedenen Aluminiumoxide auf die Porosität und die resultierende Porengröße der jeweiligen porösen anorganischen Beschichtung auswirkt. Zur Ermittlung dieser Daten wurden die entsprechenden Schlicker (Suspensionen) hergestellt und als reine Formkörper bei 200 °C getrocknet und verfestigt.

**Tabelle 1: Typische Daten von Keramiken in Abhängigkeit vom eingesetzten Pulvertyp**

| Al₂O₃-Typ | Porosität / % | Mittl. Porengröße / nm |
|---|---|---|
| AlCoA CL3000SG | 51,0 | 755 |
| AlCoA CT800SG | 53,1 | 820 |
| AlCoA HVA SG | 53,3 | 865 |
| AlCoA CL4400FG | 44,8 | 1015 |
| Martinsw. DN 206 | 42,9 | 1025 |
| Martinsw. MDS 6 | 40,8 | 605 |
| Martinsw. MZS 1 + Martinsw. MZS 3 = 1:1 | 47 % | 445 |
| Martinsw. MZS 3 | 48 % | 690 |

Zur Verbesserung der Haftung der anorganischen Komponenten an Polymerfasern als Substrat kann es vorteilhaft sein, den eingesetzten Suspensionen Haftvermittler, wie z. B. organofunktionelle Silane beizufügen. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die nachfolgende Tabelle 2 enthält einen beispielhaften Überblick über einsetzbare Haftvermittler auf Basis von organofunktionellen Si-Verbindungen für typische als Vliesmaterial verwendete Polymere.

**Tabelle 2**

| Polymer | Organofunktionstyp | Haflvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxytrimethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

In einer besonderen Ausführungsform des erfindungsgemäßen Verfahrens werden die oben genannten Haftvermittler in einem vorgeschalteten Schritt auf Polymervlies (Substrat) aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.

Durch das Aufbringen eines Haftvermittlers vor dem eigentlichen Aufbringen der Suspension kann das Haftverhalten der Substrate insbesondere gegenüber wässrigen, partikulären Solen verbessert werden, weshalb insbesondere so vorbehandelte Substrate mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren des erfindungsgemäßen Separators um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Die erfindungsgemäßen Beschichtungen werden durch Verfestigen der Suspension in und auf dem Vlies in und auf das Vlies gebracht. Erfindungsgemäß kann die auf und im Vlies vorhandene Suspension durch Erwärmen auf 50 bis 350 °C verfestigt werden. Da bei der Verwendung polymerer Substratmaterialien die maximale Temperatur durch das Vlies vorgegeben wird, ist diese entsprechend anzupassen. So wird je nach Ausführungsvariante des erfindungsgemäßen Verfahrens die auf und im Vlies vorhandene Suspension durch Erwärmen auf 100 bis 350 °C und ganz besonders bevorzugt durch Erwärmen auf 110 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 110 bis 280 °C und vorzugsweise für 0,5 bis 10 min.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

Das erfindungsgemäße Verfahren kann z. B. so durchgeführt werden, dass das Polymervlies als Substrat von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in das Substrat bringt, wie z. B. eine Walze, und zumindest eine weitere Apparatur, welche das Verfestigen der Suspension auf und in dem Support durch Erwärmen ermöglicht, wie z. B. ein elektrisch beheizter Ofen durchläuft und der so hergestellte Separator auf einer zweiten Rolle aufgerollt wird. Auf diese Weise ist es möglich, den erfindungsgemäßen Separator im Durchlaufverfahren herzustellen. Auch die Vorbehandlungsschritte können im Durchlaufverfahren unter Beibehaltung der genannten Parameter durchgeführt werden.

Es hat sich als besonders vorteilhaft erwiesen, wenn das Verfahren so durchgeführt wird, dass das Vlies, insbesondere das Polymervlies während des Beschichtungsprozesses bzw. der Beschichtungsprozesse eine maximale Spannung in Längsrichtung von 10 N/cm, vorzugsweise von 3 N/cm aufweist. Unter Beschichtungsprozessen werden dabei alle Verfahrenschritte verstanden, bei denen ein Material auf und in das Substrat gebracht wird und dort durch Wärmebehandlung verfestigt wird, also auch das Aufbringen des Haftvermittlers. Vorzugsweise wird das Substrat während der Beschichtungsprozesse mit einer maximalen Kraft von 0,01 N/cm gespannt. Besonders bevorzugt kann es sein, wenn das Substrat während des Beschichtungsprozesses bzw. der Beschichtungsprozesse in Längsrichtung ungespannt geführt wird.

Durch die Kontrolle der Zugspannung während der Beschichtung kann vermieden werden, dass eine Deformation (auch elastische) des Trägermaterials stattfindet. Durch eine evtl. Deformation (Dehnung) bei zu hoher Zugspannung kann die keramische Beschichtung dem Vlies-Werkstoff nicht folgen, was dazu führt, das die Beschichtung sich auf der gesamten Fläche vom Vliesmaterial löst. Das daraus resultierende Produkt kann dann nicht bestimmungsgemäß verwendet werden.

Soll der erfindungsgemäße Separator mit einem zusätzlichen automatischen Abschaltmechanismus ausgerüstet werden, so kann dies z. B. dadurch geschehen, dass nach dem Verfestigen der auf das Substrat aufgebrachten Suspension eine Schicht aus Partikeln, die bei einer gewünschten Temperatur schmelzen und die Poren des Separators verschließen, so genannte Abschaltpartikeln, zur Erzeugung eines Abschaltmechanismus auf den Separator aufgebracht und fixiert wird. Die Schicht aus Abschaltpartikeln kann z. B. durch Aufbringen einer Suspension von Wachspartikeln mit einer mittleren Partikelgröße größer der mittleren Porengröße des Separators in einem Sol, Wasser, Lösemittel oder Lösemittelgemisch erzeugt werden.

Die Suspension zur Aufbringung der Partikel enthält vorzugsweise von 1 bis 50 Gew.-%, bevorzugt von 5 bis 40 Gew.-% und ganz besonders bevorzugt von 10 bis 30 Gew.-% an Abschaltpartikeln, insbesondere Wachspartikeln in der Suspension.

Da die anorganischen Beschichtung des Separators häufig einen sehr hydrophilen Charakter hat, hat es sich als vorteilhaft erwiesen, wenn die Beschichtung des Separators unter Verwendung eines Silans in einem polymeren Sol als Haftvermittler hergestellt wurde und somit hydrophobiert wurde. Um eine gute Haftung und gleichmäßige Verteilung der Abschaltpartikel in der Abschaltschicht auch auf hydrophilen porösen anorganischen Separatorschichten zu erreichen, sind mehrere Varianten möglich.

In einer Ausführungsvariante des erfindungsgemäßen Verfahrens hat es sich als vorteilhaft erwiesen, die poröse anorganische Schicht des Separators vor dem Aufbringen der Abschaltpartikel zu hydrophobieren. Die Herstellung hydrophober Membrane, die nach dem selben Prinzip funktioniert, wird beispielsweise in WO 99/62624 beschrieben. Vorzugsweise wird die poröse anorganische Beschichtung durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (D. Knittel; E. Schollmeyer; Melliand Textilber. (1998) 79(5), 362-363)*,* unter geringfügiger Änderung der Rezepturen, auch für die porösen Beschichtungen des Separators angewendet werden. Zu diesem Zweck wird die Beschichtung bzw. der Separator mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10 Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die anorganische Beschichtung des Separators aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Beschichtung vor dem Aufbringen der Abschaltpartikel auch mit anderen Haftvermittlern behandelt werden. Die Behandlung mit einem der unten genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Ether oder Ketone, oder einem Lösemittelgemisch auf die anorganische Beschichtung des Separators und anschließendes Trocknen erzeugt. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer oder gleich, vorzugsweise größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Separatorschicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht des Separators erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen wie z. B. Aerosil 200 ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf eine anorganische Schicht des Separators aufgebracht werden, auch wenn diese nicht vor dem Aufbringen hydrophobiert wurde. Natürlich kann eine Haftvermittler aufweisende Suspension auch auf eine hydrophobierte Schicht oder auf eine Separatorschicht, bei deren Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Haftvermittler sind z. B. AMEO (3-Aminopropyltriethoxysilan), MEMO (3-methacryloxypropyltrimethoxysilan), Silfin (Vinylsilan + Initiator + Katalysator), VTEO (Vinyltriethoxysilan) oder VTMO (Vinyltrimethoxysilan). Solche Silane sind z. B. von der Degussa auch in wässriger Lösung unter der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Schicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel

Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht des Separators erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird.

Es kann vorteilhaft sein, wenn die Abschaltpartikel nach dem Aufbringen auf die poröse anorganische Schicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen anorganischen Separatorschicht haften.

Das Aufbringen der die Abschaltpartikel aufweisenden Suspension mit anschließendem Trocknen sowie ein eventuelles Erwärmen über die Glasübergangstemperatur kann kontinuierlich oder quasi kontinuierlich durchgeführt werden. Wird eine flexibler Separator als Ausgangsmaterial eingesetzt, so kann diese wiederum von einer Rolle abgewickelt, durch eine Beschichtungs-, Trocknungs- und gegebenenfalls Erwärmungsapparatur geführt und anschließend wieder aufgerollt werden.

Erfindungsgemäße hybride Separatoren können als Separatoren in Batterien verwendet werden. Bei der erfindungsgemäßen Verwendung des Separators als Separator in Batterien wird der Separator üblicherweise mit dem Elektrolyten getränkt zwischen der Anode und der Kathode platziert.

Der erfindungsgemäße Separator ist für primäre und sekundäre (wiederaufladbare) Lithium-Batterien, für Nickelmetallhydrid-, Nickel-Cadmium-, Silber-Zink und Zink-Luft-Batterien geeignet. Durch seine besonders hohe Porosität und die großen Poren ist der erfindungsgemäße Separator insbesondere geeignet um in Lithium-Hochleistungsbatterien verwendet zu werden.

Neben Batterien, die einen erfindungsgemäßen Separator aufweisen, sind deshalb Gegenstand der vorliegenden Erfindung insbesondere Lithium-Hochleistungsbatterien, die einen erfindungsgemäßen Separator aufweisen.

Ebenso gut geeignet sind die erfindungsgemäßen Separatoren für den Einsatz in Batterien die schnell aufgeladen werden sollen. Solche Hochleistungsbatterien können sehr schnell aufgeladen aber auch entladen werden. Vorteilhaft sind hier vor allem die optimierten Eigenschaften des Separators im Hinblick auf Dicke, Porenradius, Porosität und dadurch der hohen Ionenleitfähigkeit des mit Elektrolyt getränkten Separators. Durch die hohe Temperaturbeständigkeit des erfindungsgemäßen Separators ist eine Batterie, die mit diesem Separator ausgerüstet ist, nicht so temperaturempfindlich und kann daher den Temperaturanstieg aufgrund der schnellen Ladung ohne negative Veränderungen des Separators bzw. ohne Beschädigung der Batterie dulden. Folglich sind diese Batterien deutlich schneller aufzuladen.

Dies ist ein deutlicher Vorteil beim Einsatz solcher Art ausgerüsteter Batterien in Elektrofahrzeugen, da diese nicht mehr über mehrere Stunden geladen werden müssen, sondern das Aufladen innerhalb von idealerweise um eine Stunde bzw. weniger als eine Stunde durchführbar ist.

Die vorliegende Erfindung wird durch die nachfolgenden Beispiele beschrieben, ohne darauf beschränkt zu sein.

### Beispiel 1: Herstellung eines S450PET-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m² wird damit in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt auf das Vlies aufgewalzt. Das Vlies läuft anschließend durch einen Ofen, der die angegebene Temperatur aufweist. In den nachfolgenden Versuchen wird die gleiche Methode bzw. Anordnung zur Beschichtung verwendet. Man erhält am Ende einen Separator mit einer mittleren Porenweite von 450 nm und einer Dicke von ca. 50 µm. Die Gurleyzahl beträgt etwa 6.

Parallel wird mit dem obigen Schlicker ein massiver Formkörper hergestellt und ebenfalls bei 200 °C getrocknet und verfestigt. Die Porosität beträgt etwa 47 %, die mittlere Porengröße 450 nm.

### Beispiel 2: Herstellung eines S750PET-Separators

Zu 130 g Wasser und 30 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann 260 g CL3000 SG (Hersteller: AlCoA) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt. Vor dem Beschichten wird dieser Schlicker über ein 20 µm-Sieb filtriert um den Grobkornanteil zu entfernen.

Ein PET-Vlies mit einer Dicke von ca. 15 µm und einem Flächengewicht von etwa 6 g/m² wird damit in einem kontinuierlichen Aufwalzverfahren (Bandgeschwindigkeit ca. 8 m/h, T = 200 °C) mit obigem Schlicker beschichtet. Man erhält am Ende einen Separator mit einer mittleren Porenweite von 755 nm und einer Dicke von 30 µm. Die Gurley-Zahl beträgt etwa 3.

Parallel wird mit dem obigen Schlicker ein massiver Formkörper hergestellt und ebenfalls bei 200 °C getrocknet und verfestigt. Die Porosität beträgt etwa 51 %, die mittlere Porengröße 755 nm.

### Beispiel 3: Herstellung eines S850PET-Separators

Zu 145 g Wasser und 15 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann 280 g HVA SG (Hersteller: AlCoA) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt. Vor dem Beschichten wird dieser Schlicker über ein 15 µm-Sieb filtriert um den Grobkornanteil zu entfernen.

Ein PET-Vlies mit einer Dicke von ca. 15 µm und einem Flächengewicht von etwa 6 g/m² wird damit in einem kontinuierlichen Aufwalzverfahren (Bandgeschwindigkeit ca. 8 m/h, T = 200 °C) mit obigem Schlicker beschichtet. Man erhält am Ende einen Separator mit einer mittleren Porenweite von 865 nm und einer Dicke von 30 µm. Die Gurley-Zahl beträgt etwa 2.

Parallel wird mit dem obigen Schlicker ein massiver Formkörper hergestellt und ebenfalls bei 200 °C getrocknet und verfestigt. Die Porosität beträgt etwa 53 %, die mittlere Porengröße 865 nm.

### Beispiel 4: Li-Ionen-Batterie mit hybridem keramischen Separator

Ein gemäß Beispiel 1 hergestellter S450PET-Separator wird in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat, eingebaut [LiCoO2 // S-450-PET, EC/DMC 1:1, 1M LiPF₆ // Graphit]. Es wurde das Lade- und Entladeverhalten dieser Batterie überprüft. Die Batterie zeigt nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadet der Batterie nicht.

Wir diese Batterie aber mit C (ca. 3 mA/cm²) entladen, so lässt sich bei diesen hohen Strömen nicht die gesamte Kapazität entladen. Dies ist auf den noch zu hohen Innenwiderstand zurückzuführen.

### Beispiel 5: Li-Ionen-Batterie mit hybridem keramischen Separator

Ein gemäß Beispiel 3 hergestellter S850PET-Separator wird in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat, eingebaut [LiCoO2 // S-450-PET, EC/DMC 1:1, 1M LiPF₆ // Graphit]. Es wurde das Lade- und Entladeverhalten dieser Batterie überprüft. Die Batterie zeigt nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadet der Batterie nicht.

Wir diese Batterie mit C (ca. 3 mA/cm²) entladen, so lässt sich bei diesen hohen Strömen praktisch die gesamte Kapazität der Batterie entladen. Dies ist auf die im Vergleich zu Beispiel 4 höhere Porosität, geringere Dicke größere Porengröße und damit verbunden geringerem Innenwiderstand zurückzuführen.

Dieser Separator ist also für eine Hochstrombatterie besonders gut geeignet.

## Patentansprüche

1. Separator, umfassend ein flexibles Vlies mit einer auf und in diesem Vlies befindlichen porösen anorganischen Beschichtung, wobei das Material des Vlieses ausgewählt ist aus ungewebten, nicht elektrisch leitfähigen Polymerfasern,
**dadurch gekennzeichnet,**
**dass** das Vlies eine Dicke von weniger als 30 µm, eine Porosität von mehr als 50 % und eine Porenradienverteilung aufweist, bei der mindestens 50 % der Poren einen Porenradius von 75 bis 150 µm aufweisen.

2. Separator gemäß Anspruch 1,
**dadurch gekennzeichnet,**
**dass** der Separator eine Dicke von kleiner 35 µm aufweist.

3. Separator nach Anspruch 1 oder 2,
**dadurch gekennzeichnet,**
**dass** die Polymerfasern, ausgewählt sind aus Fasern von Polyacrylnitril, Polyester und/oder Polyolefin.

4. Separator gemäß zumindest einem der Ansprüche 1 bis 3,
**dadurch gekennzeichnet,**
**dass** die Polymerfasern einen Durchmesser von 0,1 bis 10 µm aufweisen.

5. Separator gemäß zumindest einem der Ansprüche 1 bis 4,
**dadurch gekennzeichnet,**
**dass** das flexible Vlies ein Flächengewicht von kleiner 20 g/m² aufweist.

6. Separator nach zumindest einem der Ansprüche 1 bis 5,
**dadurch gekennzeichnet,**
**dass** das Vlies eine Dicke von 5 bis 30 µm aufweist.

7. Separator gemäß einem der Ansprüche 1 bits 6,
**dadurch gekennzeichnet,**
**dass** die auf und in dem Vlies befindliche poröse anorganische Beschichtung Oxid-Partikel der Elemente Al, Si und/oder Zr mit einer mittleren Partikelgröße von 0,5 bis 7µm aufweist.

8. Separator gemäß einem der Ansprüche 1 bis 7,
**dadurch gekennzeichnet,**
**dass** die auf und in dem Vlies befindliche poröse anorganische Beschichtung Aluminiumoxid-Partikel mit einer mittleren Partikelgröße von 1 bis 4 µm aufweist, die mit einem Oxid der Elemente Zr oder Si verklebt sind.

9. Separator gemäß zumindest einem der Ansprüche 1 bis 8,
**dadurch gekennzeichnet,**
**dass** der Separator eine Porosität von 30 bis 80 % aufweist..

10. Separator gemäß zumindest einem der Ansprüche 1 bis 9,
**dadurch gekennzeichnet,**
**dass** der Separator eine Reißfestigkeit von mehr als 1 N/cm aufweist.

11. Separator gemäß zumindest einem der Ansprüche 1 bis 10,
**dadurch gekennzeichnet,**
**dass** der Separator ohne Beschädigung bis auf einen Radius bis herab zu 100 m biegbar ist.

12. Separator gemäß zumindest einem der Ansprüche 1 bis 11,
**dadurch gekennzeichnet,**
**dass** der Separator ohne Beschädigung bis auf einen Radius bis herab zu 1mm biegbar ist.

13. Verfahren zur Herstellung eines Separators gemäß zumindest einem der Ansprüche 1 bis 12,
**dadurch gekennzeichnet,**
**dass** in und auf ein flexibles Vlies, das eine Dicke von weniger als 30 µm, eine Porosität von mehr als 50 % und eine Porenradienverteilung aufweist, bei der 50 % der Poren einen Porenradius von 75 bis 150 µm aufweisen, durch Aufbringen einer Suspension und zumindest einmaliges Erwärmen, bei welchem die Suspension auf und im Vlies verfestigt wird, eine poröse, anorganische Beschichtung gebracht wird, und wobei die Suspension Oxid-Partikel und zumindest ein Sol aufweist und das Material des Vlieses ausgewählt ist aus ungewebten, nicht elektrisch leitfähigen Polymerfasern.

14. Verfahren nach Anspruch 13,
**dadurch gekennzeichnet,**
**dass** die Suspension Oxid-Partikel mit einem mittleren Partikeldurchmesser von 0,5 bis 7 µm der Elemente Al, Zr und/oder Si und zumindest ein Sol aufweist.

15. Verfahren nach Anspruch 13 oder 14,
**dadurch gekennzeichnet,**
**dass** die Suspension durch Aufdrucken, Aufpressen, Einpressen, Aufrollen, Aufrakeln, Aufstreichen, Tauchen, Spritzen oder Aufgießen auf und in das Substrat gebracht wird.

16. Verfahren nach zumindest einem der Ansprüche 13 bis 15,
**dadurch gekennzeichnet,**
**dass** die Polymerfasern ausgewählt sind aus Fasern von Polyacrylnitril, Polyester oder Polyolefin.

17. Verfahren nach zumindest einem der Ansprüche 13 bis 16,
**dadurch gekennzeichnet,**
**dass** die Suspension zumindest ein Sol der Elemente Al, Zr und/oder Si aufweist, und durch Suspendieren von Oxid-Partikeln in zumindest einem dieser Sole hergestellt wird.

18. Verfahren nach Anspruch 17,
**dadurch gekennzeichnet,**
**dass** die Sole durch Hydrolisieren zumindest einer Verbindung der Elemente Al, Zr und/oder Si mit Wasser oder einer Säure oder eine Kombination dieser Verbindungen erhalten werden.

19. Verfahren nach Anspruch 18,
**dadurch gekennzeichnet,**
**dass** zumindest eine Alkoholatverbindung der Elemente Zr, Al und/oder Si oder zumindest ein Nitrat, Carbonat oder Halogenid ausgewählt aus den Verbindungen der Elemente Zr, Al und/oder Si hydrolisiert wird.

20. Verfahren nach zumindest einem der Ansprüche 13 bis 19,
**dadurch gekennzeichnet,**
**dass** als Metalloxid-Partikel Aluminiumoxidpartikel eingesetzt werden, die eine mittlere Partikelgröße von 0,5 bis 7 µm aufweisen.

21. Verfahren nach zumindest einem der Ansprüche 17 bis 20,
**dadurch gekennzeichnet,**
**dass** der Massenanteil der suspendierten Metalloxid-Partikel dem 1 bis 10fachen des eingesetzten Sols entspricht.

22. Verfahren nach zumindest einem der Ansprüche 13 bis 21,
**dadurch gekennzeichnet,**
**dass** die auf und im Vlies vorhandene Suspension durch Erwärmen auf 50 bis 350 °C verfestigt wird.

23. Verfahren nach Anspruch 22,
**dadurch gekennzeichnet,**
**dass** das Erwärmen für 0,5 bis 10 Minuten bei einer Temperatur von 110 bis 280 °C erfolgt.

24. Verwendung eines Separators gemäß zumindest einem der Ansprüche 1 bis 12 als Separator in Lithium-Batterien.

25. Batterie, einen Separator gemäß zumindest einem der Ansprüche 1 bis 12 aufweisend.

## Claims

1. Separator comprising a flexible nonwoven having a porous inorganic coating on and in said nonwoven, the material of said nonwoven being selected from non-woven nonelectroconductive polymeric fibers, **characterized by** said nonwoven having a thickness of less than 30 µm, a porosity of more than 50% and a pore radius distribution in which at least 50% of the pores have a pore radius from 75 to 150 µm.

2. Separator according to Claim 1, **characterized by** said separator being less than 35 µm in thickness.

3. Separator according to Claim 1 or 2, **characterized by** said polymeric fibers being selected from fibers of polyacrylonitrile, polyester and/or polyolefin.

4. Separator according to at least one of Claims 1 to 3, **characterized by** said polymeric fibers being from 0.1 to 10 µm in diameter.

5. Separator according to at least one of Claims 1 to 4, **characterized by** said flexible nonwoven having a base weight of less than 20 g/m².

6. Separator according to at least one of Claims 1 to 5, **characterized by** said nonwoven being from 5 to 30 µm in thickness.

7. Separator according to any of Claims 1 to 6, **characterized by** said porous inorganic coating present on and in said nonwoven comprising oxide particles of the elements Al, Si and/or Zr having an average particle size from 0.5 to 7 µm.

8. Separator according to any of Claims 1 to 7, **characterized by** said porous inorganic coating present on and in said nonwoven comprising aluminum oxide particles having an average particle size from 1 to 4 µm which are adhered by an oxide of the elements Zr or Si.

9. Separator according to at least one of Claims 1 to 8, **characterized by** said separator being from 30 to 80% in porosity.

10. Separator according to at least one of Claims 1 to 9, **characterized by** said separator having a breaking strength of more than 1 N/cm.

11. Separator according to at least one of Claims 1 to 10, **characterized by** said separator being bendable around a radius down to 100 m without damage.

12. Separator according to at least one of Claims 1 to 11, **characterized by** said separator being bendable around a radius down to 1 mm without damage.

13. Process for producing a separator according to at least one of Claims 1 to 12, **characterized in that** a flexible nonwoven which has a thickness of less than 30 µm, a porosity of more than 50% and a pore radius distribution in which 50% of the pores have a pore radius from 75 to 150 µm is provided with a porous inorganic coating on and in said flexible nonwoven by applying to said nonwoven a suspension comprising oxide particles and at least one sol and heating one or more times to solidify said suspension on and in said nonwoven, the material of said nonwoven being selected from non-woven nonelectroconductive polymeric fibers.

14. Process according to Claim 13, **characterized in that** said suspension comprises oxide particles having an average particle diameter from 0.5 to 7 µm of the elements Al, Zr and/or Si and at least one sol.

15. Process according to Claim 13 or 14, **characterized in that** said suspension is brought onto and into said substrate by printing on, pressing on, pressing in, rolling on, knifecoating on, spreadcoating on, dipping, spraying or pouring on.

16. Process according to at least one of Claims 13 to 15, **characterized in that** said polymeric fibers are selected from the fibers of polyacrylonitrile, polyester or polyolefin.

17. Process according to at least one of Claims 13 to 16, **characterized in that** said suspension comprises at least one sol of the elements Al, Zr and/or Si and is prepared by suspending oxide particles in at least one of these sols.

18. Process according to Claim 17, **characterized in that** said sols are obtained by hydrolyzing at least one compound of the elements Al, Zr and/or Si with water or an acid or a combination thereof.

19. Process according to Claim 18, **characterized in that** said hydrolyzing is effected on at least one alkoxide compound of the elements Zr, Al and/or Si or at least one nitrate, carbonate or halide selected from the compounds of the elements Zr, Al and/or Si.

20. Process according to at least one of Claims 13 to 19, **characterized in that** said metal oxide particles are aluminum oxide particles having an average particle size from 0.5 to 7 µm.

21. Process according to at least one of Claims 17 to 20, **characterized in that** the mass fraction of said suspended metal oxide particles is from 1 to 10 times that of the sol used.

22. Process according to at least one of Claims 13 to 21, **characterized in that** said suspension present on and in said nonwoven is solidified by heating to 50-350°C.

23. Process according to Claim 22, **characterized in that** said heating is effected at from 110 to 280°C for from 0.5 to 10 minutes.

24. Use of a separator according to at least one of Claims 1 to 12 as a separator in lithium batteries.

25. Battery comprising a separator according to at least one of Claims 1 to 12.

## Revendications

1. Séparateur, comprenant un non-tissé souple présentant un revêtement inorganique poreux se trouvant sur et dans ce non-tissé, le matériau du non-tissé étant choisi parmi les fibres polymères non tissées, électriquement non conductrices, **caractérisé en ce que** le non-tissé présente une épaisseur de moins de 30 µm, une porosité supérieure à 50% et une répartition des rayons des pores dans laquelle au moins 50% des pores présentent un rayon de pore de 75 à 150 µm.

2. Séparateur selon la revendication 1, **caractérisé en ce que** le séparateur présente une épaisseur inférieure à 35 µm.

3. Séparateur selon la revendication 1 ou 2, **caractérisé en ce que** les fibres polymères sont choisies parmi les fibres de polyacrylonitrile, de polyester et/ou de polyoléfine.

4. Séparateur selon au moins l'une quelconque des revendications 1 à 3, **caractérisé en ce que** les fibres polymères présentent un diamètre de 0,1 à 10 µm.

5. Séparateur selon au moins l'une quelconque des revendications 1 à 4, **caractérisé en ce que** le non-tissé souple présente un poids surfacique inférieur à 20 g/m².

6. Séparateur selon au moins l'une quelconque des revendications 1 à 5, **caractérisé en ce que** le non-tissé présente une épaisseur de 5 à 30 µm.

7. Séparateur selon l'une quelconque des revendications 1 à 6, **caractérisé en ce que** le revêtement inorganique poreux se trouvant sur et dans le non-tissé présente des particules d'oxydes des éléments Al, Si et/ou Zr présentant une grosseur moyenne des particules de 0,5 à 7 µm.

8. Séparateur selon l'une quelconque des revendications 1 à 7, **caractérisé en ce que** le revêtement inorganique poreux se trouvant sur et dans le non-tissé présente des particules d'oxyde d'aluminium présentant une grosseur moyenne de particules de 1 à 4 µm, qui sont collées par un oxyde des éléments Zr ou Si.

9. Séparateur selon au moins l'une quelconque des revendications 1 à 8, **caractérisé en ce que** le séparateur présente une porosité de 30 à 80%.

10. Séparateur selon au moins l'une quelconque des revendications 1 à 9, **caractérisé en ce que** le séparateur présente une résistance à la déchirure supérieure à 1 N/cm.

11. Séparateur selon au moins l'une quelconque des revendications 1 à 10, **caractérisé en ce que** le séparateur est pliable sans dégradation jusqu'à un rayon pouvant descendre jusqu'à 100 m.

12. Séparateur selon au moins l'une quelconque des revendications 1 à 11, **caractérisé en ce que** le séparateur est pliable sans dégradation jusqu'à un rayon pouvant descendre jusqu'à 1 mm.

13. Procédé pour la fabrication d'un séparateur selon au moins l'une quelconque des revendications 1 à 12, **caractérisé en ce qu'**on applique un revêtement inorganique, poreux, dans ou sur un non-tissé souple, qui présente une épaisseur de moins de 30 µm, une porosité de plus de 50% et une répartition des rayons des pores, dans laquelle 50% des pores présentent un rayon de pore de 75 à 150 µm, par application d'une suspension et au moins un cycle de chauffage, au cours duquel la suspension est solidifiée sur et dans le non-tissé, la suspension présentant des particules d'oxydes et au moins un sol et le matériau du non-tissé étant choisi parmi les fibres polymères non tissées, électriquement non conductrices.

14. Procédé selon la revendication 13, **caractérisé en ce que** la suspension présente des particules d'oxydes présentant un diamètre moyen des particules de 0,5 à 7 µm des éléments Al, Zr et/ou Si et au moins un sol.

15. Procédé selon la revendication 13 ou 14, **caractérisé en ce que** la suspension est appliquée sur et dans le substrat par impression, par compression, par pressage, au cylindre, par raclage, par enduction, par trempage, par pulvérisation ou par coulage.

16. Procédé selon au moins l'une quelconque des revendications 13 à 15, **caractérisé en ce que** les fibres polymères sont choisies parmi les fibres de polyacrylonitrile, de polyester ou de polyoléfine.

17. Procédé selon au moins l'une quelconque des revendications 13 à 16, **caractérisé en ce que** la suspension présente au moins un sol des éléments Al, Zr et/ou Si et est préparée par suspension de particules d'oxydes dans au moins un de ces sols.

18. Procédé selon la revendication 17, **caractérisé en ce que** les sols sont obtenus par hydrolyse d'au moins un composé des éléments Al, Zr et/ou Si avec de l'eau ou un acide ou une combinaison de ces composés.

19. Procédé selon la revendication 18, **caractérisé en ce qu'**au moins un composé de type alcoolate des éléments Zr, Al et/ou Si ou au moins un nitrate, un carbonate ou un halogénure choisi parmi les composés des éléments Zr, Al et/ou Si, est hydrolysé.

20. Procédé selon au moins l'une quelconque des revendications 13 à 19, **caractérisé en ce qu'**on utilise comme particules d'oxyde de métal des particules d'oxyde d'aluminium, qui présentent une grosseur moyenne des particules de 0,5 à 7 µm.

21. Procédé selon au moins l'une quelconque des revendications 17 à 20, **caractérisé en ce que** la proportion massique des particules d'oxydes de métal en suspension correspond à 1 jusqu'à 10 fois celle du sol utilisé.

22. Procédé selon au moins l'une quelconque des revendications 13 à 21, **caractérisé en ce que** la suspension présente sur et dans le non-tissé est solidifiée par chauffage à 50 jusqu'à 350°C.

23. Procédé selon la revendication 22, **caractérisé en ce que** le chauffage est réalisé pendant 0,5 à 10 minutes à une température de 110 à 280°C.

24. Utilisation d'un séparateur selon au moins l'une quelconque des revendications 1 à 12 comme séparateur dans des batteries au lithium.

25. Batterie, présentant un séparateur selon au moins l'une quelconque des revendications 1 à 12.
